# EUROPÄISCHE PATENTANMELDUNG

(11) **EP 1 852 374 A1**
(43) Veröffentlichungstag der Anmeldung: **07.11.2007**
(21) Anmeldenummer: 07008254.0
(22) Anmeldetag: 23.04.2007
(51) Int. Cl.: B65G 45/24, B65G 45/12, B65G 45/22

(54) **Fördergurtreiniger**

(30) Priorität: 02.05.2006 DE 202006007102 U
(71) Anmelder: Mitteldeutsche Braunkohlengesellschaft mbH, 06727 Theißen (DE)
(72) Erfinder: Schneider, Wolfgang, 06679 Hohenmölsen (DE)
(74) Vertreter: Kraft, Werner

(57) **Zusammenfassung**

Die Erfindung betrifft einen Fördergurtreiniger mit hoher Reinigungsleistung.

Dieser ist speziell für den Einsatz an Bandanlagen der Montanindustrie konzipiert.

Vom Konstruktionsprinzip her ist er aber gleichermaßen an jeglichen mit Fördergurten ausgerüsteten Bandanlagen einsetzbar, beispielsweise in der Lebensmittelindustrie oder in der Landwirtschaft.

Ein mit wenigstens einem Abstreichmodul versehener Fördergurtreiniger ist erfindungsgemäß derart weiterentwickelt, dass zum bewährten auf Dauer angelegten mechanischen Reinigungsprinzip, nämlich dem Anpressen der Abstreichmodule an den Fördergurt, eine weitere Reinigungsmethode mittels gerichteten Gas- oder Fluidstrahl, vorzugsweise bei Nutzung von Druckluft oder Wasser, hinzutritt, wobei diese Reinigungsstufe bei Bedarf zuschaltbar bzw. auch dauerhaft aktiv ist.

Ein Fördergurtreiniger der erfindungsgemäßen Art ist demnach dadurch gekennzeichnet, dass ein Systemträger wenigstens einen Anschluss für ein flüssiges bzw. gasförmiges Reinigungsmedium aufweist und in Richtung der Abstreichmodule mit Öffnungen zur Erzeugung von Reinigungsstrahlen versehen ist, wobei diese direkt auf die Abstreichmodule und/oder auf den Fördergurt im Bereich der Abstreichmodule ausgerichtet sind.

## Beschreibung

Die Erfindung betrifft einen Fördergurtreiniger mit hoher Reinigungsleistung. Dieser ist speziell für den Einsatz an Bandanlagen der Montanindustrie konzipiert. Vom Konstruktionsprinzip her ist er aber gleichermaßen an jeglichen mit Fördergurten ausgerüsteten Bandanlagen einsetzbar, beispielsweise in der Lebensmittelindustrie oder in der Landwirtschaft.

### Stand der Technik

Als Fördergurtreiniger haben sich Abstreicher mit einer oder mehreren Reinigungslippen, die unter Vorspannung am Fördergurt anliegen, bewährt und umfangreich in der Praxis durchgesetzt. Die Abstreicher sind an geeigneter Stelle fest in die Bandanlage integriert. Üblicherweise sind die einzelnen Abstreichmodule (wenigstens ein Modul) auf einem Systemträger montiert. Dieser besteht im Wesentlichen aus einem Trägerrohr oder Trägerprofil mit technischen Merkmalen zur Befestigung bzw. Lagerung der Abstreichmodule und zur Realisierung des Anpressens der Selben an den zu reinigenden Fördergurt.

Bei der Beförderung von rolligem und trockenem. Material ist eine zufriedenstellende Reinigungswirkung zu verzeichnen. Verklebungen und Verkrustungen an den Abstreichmodulen selbst bleiben aus, so dass eine sichere Funktionsweise gegeben ist. Werden klebrige bis zähflüssige Transportmassen befördert, kommt es bereits nach kurzer Zeit zu Anhafterscheinungen am Fördergurt und zu besagten Verklebungen und Verkrustungen an den Abstreichmodulen. Die Folge ist, dass die Abstreichmodule vom Fördergurt weggedrückt werden, wodurch die Reinigungswirkung praktisch aufgehoben ist. In dem Fall macht sich die manuelle Reinigung mit geeigneten mechanischen Mitteln erforderlich. Dazu muss die Anlage aus Sicherheitsgründen angehalten werden. Das führt letztlich zu Produktionsausfällen und verursacht wirtschaftliche Nachteile.

Aus dem relevanten Stand der Technik sind Bemühungen zur Lösung dieses Problems erkennbar.

So wird in der DE 31 09 779 eine Reinigungsvorrichtung für Förderanlagen vorgestellt, bei unter dem Untergurt mit Druckluft beaufschlagte Düsen, insbesondere Spaltdüsen, angeordnet sind. Der erzeugte Luftstrom wird zur Gurtreinigung genutzt.

DE G 86 23 183 beschreibt eine Waschvorrichtung für einen Förderer, insbesondere ein Förderband. Dieses wird durch mehrere Waschwannen, wenigstens aber eine Waschwanne geführt. An bestimmten Stellen sind Sprüheinrichtungen zur Vor- bzw. Nachreinigung vorgesehen. Die Sprüheinrichtungen können schwenkbar bzw. drehbar gelagert sein.

Ein Abstreicher zur Reinigung der Antriebs- bzw. Umlenkrolle und der Bandunterseite nach DE G 91 13 677 besitzt einen mit Wasser, Druckluft und dgl. befüllbaren Hohlraum. Auch in DE 299 09 628 ist ein solcher fluidbeaufschlagter elastischer Querabstreifer beschrieben.
Das Fluid, bzw. die Druckluft bei dem vorgenannten Reiniger, dienen nicht direkt der Reinigung des Gurtes, sondern dem wirksameren Anstellen des Abstreichers.

Schließlich ist in der EP 0 771 745, Deutscher Teil DE 696 04 360, ein Verfahren und eine Vorrichtung zum Waschen und zum hygienischen Reinigen von Förderbändern angegeben. Wesentliche Merkmale sind ein auf das Band gerichteter Wasser- bzw. Reinigungsmittelstrahl und eine sich anschließende Reinigung mittels Bürsten, sowie eine Absaugung des gelösten Schmutzes mit nachfolgender Trocknung.

Aus dem aufgeführten naheliegenden Stand der Technik war eine technische Lösung für einen Fördergurtreiniger, der auch beim Transport von klebrigen bzw. zähflüssigen Material, befriedigende Reinigungsleistungen erwarten lässt, nicht entnehmbar. Insbesondere dann nicht, wenn wirtschaftliche Aspekte eine Rolle spielen und wenn auf die im Hinblick auf trockenes Material bewährten Reiniger mit einem Abstreichmodul, besser aber mit mehreren Abstreichmodulen, nicht verzichtet werden soll.

### Aufgabenstellung

Somit ist ein Fördergurtreiniger zu entwickeln, der die Vorteile eines Reinigers mit einem oder mehreren Abstreichmodulen bewusst nutzt und zusätzlich technische Merkmale aufweist, die geeignet sind, hohe Reinigungsleistungen beim Transport von klebrigen bzw. zähflüssigen Material zu realisieren, wobei der apparative Aufwand dafür minimal sein soll. Insbesondere ist der Fördergurtreiniger für die Anwendung in der Montanindustrie zu entwickeln. Er soll aber prinzipiell auch in anderen technischen Bereichen einsetzbar sein.

Die Lösung der Aufgabenstellung ist im Patentanspruch 1 angegeben. Die untergeordneten Ansprüche enthalten zweckmäßige Ausgestaltungen der im Patentanspruch 1 aufgeführten Merkmale.

Ein mit wenigstens einem Abstreichmodul versehener Fördergurtreiniger ist erfindungsgemäß derart weiterentwickelt, dass zum bewährten auf Dauer angelegten mechanischen Reinigungsprinzip, nämlich dem Anpressen der Abstreichmodule an den Fördergurt, eine weitere Reinigungsmethode mittels gerichteten Gas- oder Fluidstrahl, vorzugsweise bei Nutzung von Druckluft oder Wasser, hinzutritt, wobei diese Reinigungsstufe bei Bedarf zuschaltbar bzw. auch dauerhaft aktiv ist.
Die Reinigungsstrahlen treten aus dem mit Öffnungen versehenen Hohlprofil- Systemträger des Fördergurtreinigers oder auch aus einem separat angeordneten Verteiler, für den Fall, dass kein Hohlprofil- Systemträger zur Verfügung steht, aus und sind direkt auf die Abstreichmodule gerichtet bzw. treffen im Bereich der Abstreichmodule auf den Fördegurt auf. Zur Ausrichtung können verstellbare Düsen vorgesehen sein.
Durch entsprechende Gestaltung der Öffnungen bzw. der Düsen sind die Form der Reinigungsstrahlen wie auch in Abhängigkeit vom Systemdruck die Durchflussmenge und damit der Sprühdruck der Reinigungsstrahlen regelbar. An geeigneter Stelle des Systemträgers bzw. des Verteilers ist ein Anschluss in Form einer Kupplung oder eines Festanschlusses für das Reinigungsmedium vorgesehen.
Ein Medienwechsel ist problemlos ohne nennenswerte Umbauarbeiten möglich.

Somit steht ein Fördergurtreiniger zur Verfügung, mit dem gute bis hervorragende Reinigungsleistungen beim Transport von sowohl rolligem, trockenem Material als auch von klebrigen und zähflüssigen Transportmassen realisierbar sind.

Versuche an einem Absetzer in einem Tagebau der Braunkohlenindustrie haben ergeben, dass sich massive Verkrustungen an den Abstreichmodulen bei Anwendung von kaltem Wasser als Reinigungsmedium innerhalb einer Minute lösen liesen. Auch leichte Minusgrade hatten keinen negativen Einfluss auf die Reinigungsleistung.

### Ausführungsbeispiel

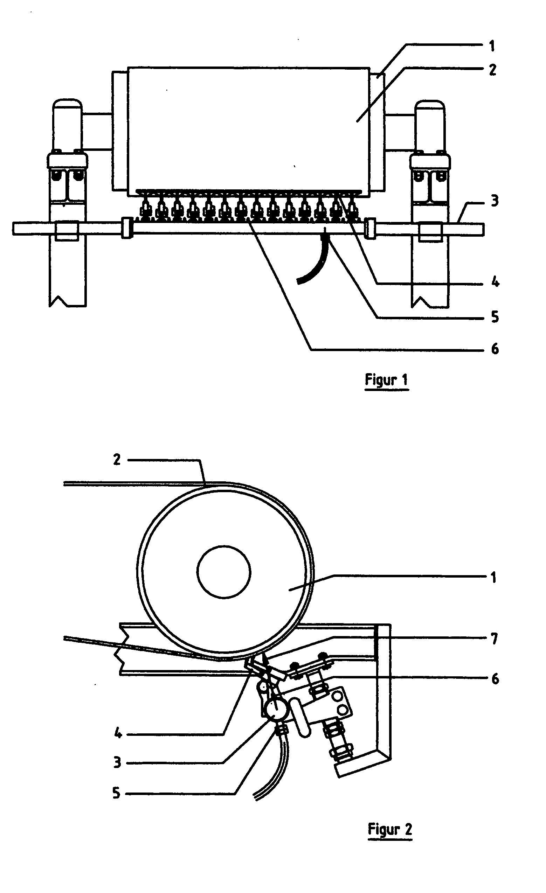

Im nachfolgenden Ausführungsbeispiel wird ein für den Einsatz in Bandanlagen der Braunkohlengewinnung vorgesehener Fördergurtreiniger der erfindungsgemäßen Art an Hand von skizzenhaften Darstellungen in den Figuren 1 und 2 näher erläutert. Die verwendeten Bezugszeichen bedeuten:

### Bezugszeichenliste

- 1: Umlenktrommel,
- 2: Fördergurt,
- 3: Systemträger,
- 4: Abstreichmodul,
- 5: Anschluss,
- 6: Öffnung,
- 7: Reinigungsstrahl.

Im gewählten Beispiel ist der Fördergurtreiniger im Bereich der Umlenktrommel 1 angeordnet. Er besteht im Wesentlichen aus einem Systemträger 3 und mehreren Abstreichmodulen 4 und ist fest in die Konstruktion der Bandanlage integriert.
Die Abstreichmodule 4 üben eine Druckkraft auf den Fördergurt 2 aus.

Der Systemträger 3 ist rohrförmig ausgebildet und zusätzlich mit Anschlüssen 5 für das flüssige bzw. gasförmige Reinigungsmedium versehen. Im gewählten Anwendungsfall ist ein gemeinsamer Anschluss für Wasser oder Luft vorgesehen. In Richtung der Abstreichmodule 4 sind Öffnungen 6 in Form von Bohrungen in den Systemträger 3 eingebracht. Der Bohrungsdurchmesser beträgt 3 bis 6 mm.
Bei Druckbeaufschlagung, der Arbeitsdruck sollte größer 4 bar sein, füllt sich zunächst der Systemträger 3 mit Wasser oder Druckluft. Danach tritt das Reinigungsmedium aus den Bohrungen 6 aus, trifft in Form von gerichteten Reinigungsstrahlen 7 auf die Abstreichmodule 4 bzw. auf den Fördergurt 2 auf und entfaltet dort die gewünschte Reinigungswirkung.

Um Wiederholungen zu Vermeiden, wird zur weiteren Erläuterung auf die vorgenannten Ausführungen der Beschreibung verwiesen.

## Patentansprüche

1. Fördergurtreiniger mit einem an der Bandanlagenkonstruktion verlagerten Hohlprofil- Systemträger, auf dem wenigstens ein Abstreichmodul, das eine permanente Druckkraft auf den Fördergurt ausübt, montiert ist, **dadurch gekennzeichnet, dass** der Systemträger (3) wenigstens einen Anschluss (5) für ein flüssiges bzw. gasförmiges Reinigungsmedium aufweist und in Richtung der Abstreichmodule (4) mit Öffnungen (6) zur Erzeugung von Reinigungsstrahlen (7) versehen ist, wobei diese direkt auf die Abstreichmodule (4) und/oder auf den Fördergurt (2) im Bereich der Abstreichmodule (4) ausgerichtet sind.

2. Fördergurtreiniger nach Anspruch 1, **dadurch gekennzeichnet, dass** als flüssiges Reinigungsmedium Wasser und als gasförmiges Reinigungsmedium Druckluft Verwendung findet.

3. Fördergurtreiniger nach Anspruch 1, **dadurch gekennzeichnet, dass** am Systemträger (3) für jedes Reinigungsmedium ein im Fall der Nichtnutzung verschließbarer Anschluss (5) vorhanden ist.

4. Fördergurtreiniger nach Anspruch 1, **dadurch gekennzeichnet, dass** der Systemträger (3) einen gemeinsamen Anschluss (5) für die einsetzbaren Reinigungsmedien aufweist.

5. Fördergurtreiniger nach Anspruch 1, **dadurch gekennzeichnet, dass** der Sprühdruck und die Form der Reinigungsstrahlen (7), wie auch deren Richtung, durch die Gestaltung, Anordnung und Dimensionierung der Öffnungen (6) festgelegt sind, wobei der Arbeitsdruck größer 4 bar sein sollte.

6. Fördergurtreiniger nach Anspruch 1, **dadurch gekennzeichnet, dass** zur Ausrichtung der Reinigungsstrahlen (7) und zur Änderung des Sprühdrucks verstellbare Düsen vorgesehen sind.

7. Fördergurtreiniger nach Anspruch 1, **dadurch gekennzeichnet, dass** in den Fällen, in denen der Systemträger (3) kein Hohlprofil aufweist, die Merkmale im Zusammenhang mit dem Reinigungsmedium einem separat angeordnetem Verteiler zugeordnet sind.
